Europäisches Patentamt

European Patent Office

Office européen des brevets

(11) Publication number: **0 241 993**
A2

## (12) EUROPEAN PATENT APPLICATION

(21) Application number: 87200654.9

(22) Date of filing: 07.04.87

(51) Int. Cl.4: **B29C 67/14** , B29C 33/36 , E04C 2/24

(30) Priority: 17.04.86 SE 8601754

(43) Date of publication of application:
21.10.87 Bulletin 87/43

(84) Designated Contracting States:
BE DE FR GB IT

(71) Applicant: **Billengren, Lars**
**Radmansgränd 67**
**S-563 00 Gränna(SE)**

(72) Inventor: **Billengren, Lars**
**Radmansgränd 67**
**S-563 00 Gränna(SE)**

(74) Representative: **Ahlström, Erik**
**AHLPATENT AB Hemstigen 21**
**S-55266 Jönköping(SE)**

(54) **Method in the manufacture of panels and the like and system for carrying out this method.**

(57) This invention relates to a method in the manufacture of panels, building boards and the like which comprise at least two surface layers, containing a curable resinous material and admixed filler, and an intermediate layer, located between said surface layers and consisting of a solid, flexible material, as well as a system for carrying out said method. To make possible a rational manufacture of such panels having a high, uniform quality and a uniform thickness, a series of molds (1) each comprising a base plate (3) are advanced in succession through a plurality of stations (11, 13, 17), in which a surface layer is applied to all of the base plates (3). Hereby only every second base plate provided with an applied layer is provided with an intermediate layer and every second base plate (3) of the series, which has been provided with an applied surface layer, is inverted and positioned upon a preceding base plate in such a manner that laminated units are formed, each comprising two base plates, an intermediate layer and two surface layers, each surface layer being located between an individual base plate and said intermediate layer. After that said units are advanced first through a curing zone (36) and subsequently through a cooling zone (37), before the panels consisting of two surface layers and an intermediate layer are separated from their appurtenant base plates.

FIG.1

## Method in the Manufacture of Panels and the like and System for carrying out this Method

### Background of the Invention

This invention relates to a method in the manufacture of panels and the like of the kind which is generally defined in the introductory portion of claim 1, as well as to a system for carrying out this method.

A known method of the kind in question forms the subject matter of US-A-4 208 228. This known method, however, has not come into utilization in practice on account of the fact that great variations in thickness of the individual layers and other significant dimensions and characteristics of the manufactured panels have proved unavoidable.

### Summary of the Invention

In view hereof the principal object of the invention is to eliminate the drawbacks of said known method and to provide a method and a system by means of which multilayer plates or panels having a high quality can be manufactured on an industrial scale.

This object is attained thanks to the fact that the method and the system are carried out in the manner set forth in the characterizing clause of claims 1 and 3, respectively.

Further features and advantages of the method and the system according to the invention will become apparent from the following detailed description and the annexed drawings which diagrammatically and as non-limiting examples illustrate a system constructed in accordance with the invention.

### Brief Description of the Drawings

Fig. 1 is a simplified, block-diagrammatical plan view of a system according to the invention.

Fig. 2 is a side view on a larger scale of an inverting apparatus comprised in the system according to Fig. 1.

Fig. 3 is an end view corresponding to Fig. 2.

### Description of the Preferred Embodiment

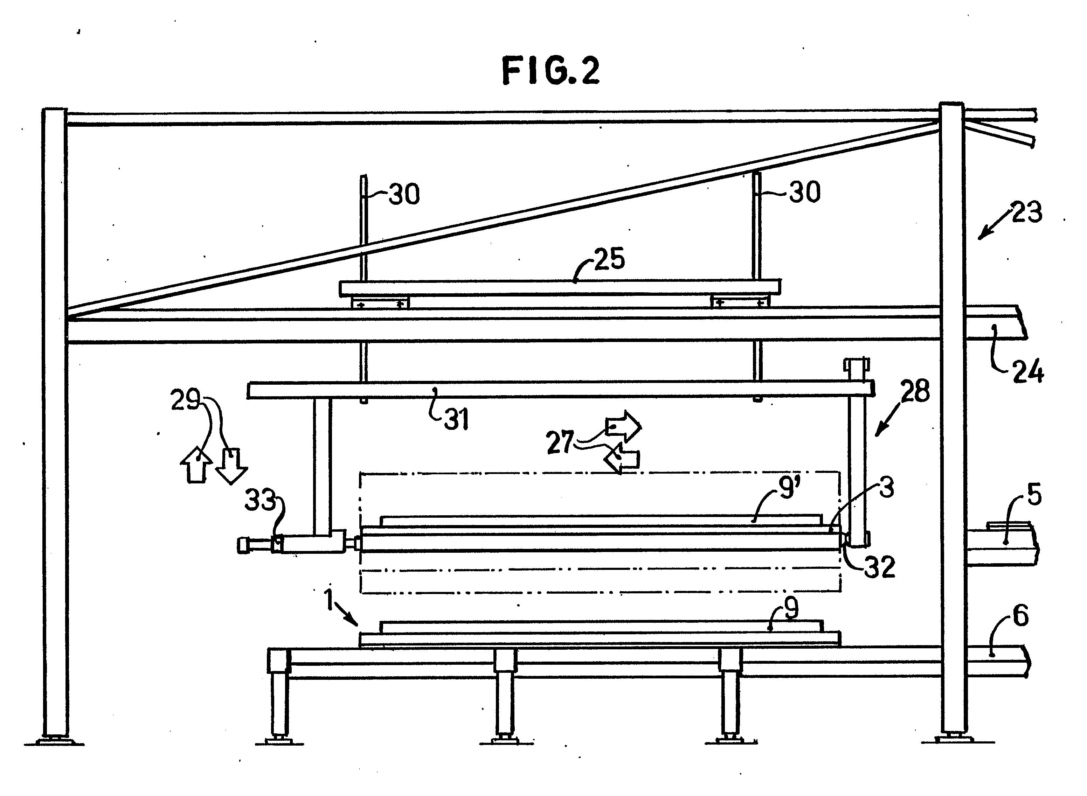

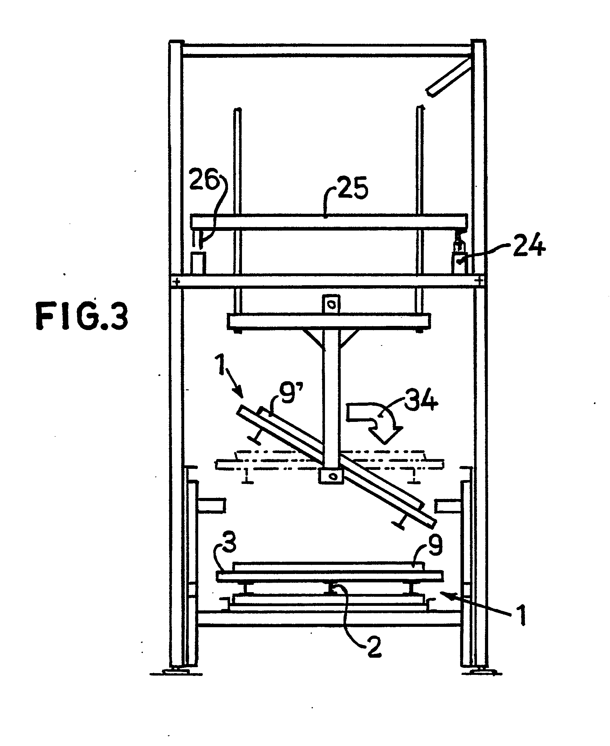

To the system there belong a great member of forms or molds or mold carriages as they will be designated in the following and which are indicated in Figs. 2 and 3. Each mold carriage which is generally designated 1 consists basically of a frame-work of profile beams, e.g. U beams or I beams 2, and an essentially plane plate 3 secured thereto. The frame can have the dimensions 320 x 150 cm. The form or mold 3 may consist of ground or polished sheet metal or a ground or polished glass, which is generally preferred. A suitable value of the thickness of the glass is approximately 10 mm. The upper side of the plate 3 may possibly be (relief-)patterned to give the manufactured panel a corresponding pattern.

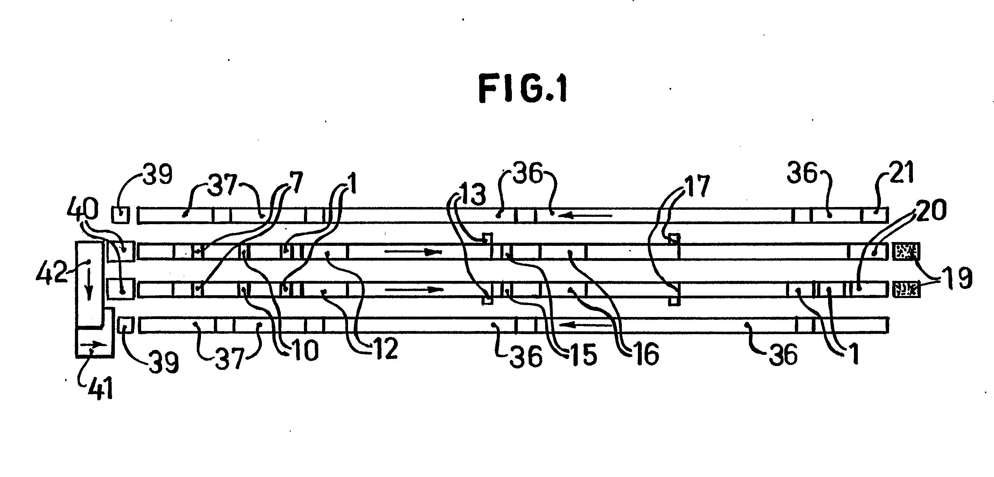

The system according to the invention comprises two tracks or lines, i.e. a first line which is generrly designated 5 and a second line which is generally designated 6. The system according to Fig. 1 is duplicated, i.e. comprises two lines of each kind 5 and 6, respectively. Each of the lines 6 is located below an individual one of the first lines 5 and has substantially the same extension and length as these. For reasons of clarity, however, the second lines 6 have been shown beside their respective first line 5. The lines constitute conveyers, each comprising a plurality of driven rollers (not shown) by means of which the mold carriages 1 are advanced.

A plurality of manufacturing or treatment stations in which material is applied to the mold carriage 1 or some other operation is carried out with respect of the mold carriage and/or its content belong to each line.

The first station 7 shown in Fig. 1 is a cleaning station in which the mold carriage plate 3 ( the glass) is cleaned and freed from possible residual material which has been applied to and adhered to the plate during the preceding passage of the mold carriage 1 through the system. After the cleaning the glass is treated with a release agent, e.g. a mixture of toluene and soya lecithine. The treatment has to be carried out in such a manner that the part of the panel ("panel element") 9 (Figs. 3 and 4) manufactured on the glass plate 3 still adheres to the glass without getting loose, even though the mold carriage and its appurtenant panels is turned upside down.

In the next station the glass plate 3 is polished and vacuum-cleaned. The polishing may be carried out by means of a rotating roller of soft polyethylene which is covered by a surface layer of lamb wool.

In those instances when the panel is to have a bright surface, the glass plate is sprayed in a third station 11 with a liquid which may contain so called gel-coat (isophtalic acid polyester plus harder) and colour pigment and other ingredients. After curing or hardening this liquid forms a bright layer which can have a thickness of 0,5 - 1 mm, e.g. 0,7 mm.

The hardening or curing which takes place immediately after the spray operation in the station 11 and which is not driven as far as to 100% curing is carried out in the following station 12 through heating, preferably through infra irradiation of the layer sprayed onto the glass 3.

In the next station 13 a first molding compound is spred out on to the possible glossy layer. In those cases, when such a layer is not desired and consequently the stations 10 and 11 are not present, the molding composition is spred out directly on to the glass plate 3. The molding composition consists of a curable resinous material, preferable a polyester plus hardener plus a filler material. The character of the hardener is selcted in dependence of the resinous material. The filler material can contain dolomite, aluminiumtrihydrate, quartz or the like and colour pigments. The proportions between the resinous material and the filler material are to be maintained within narrow, predetermined limits. The resinous material is suitably preheated, e.g. to 40°C - 60°C, whereby it becomes more fluid and a better and more uniform distribution in the resinous material of the grains having different size of the filler material. The filler should be considerably cooler than the resinous material, e.g. 15°C - 20°C. It is important that there is maintained a constant ambient temperature and a constant temperature relationship between the resinous material on one hand and the filler on the other hand.

The molding composition is applied in a conventional manner, i.e. is poured in one or several wide beams or streams on the glass plate 3 upstream of a doctor blade which extends crosswise over the glass plate 3, substantially perpendicularly to the longitudinal direction of the line 5, so that a reservoir or wall of molding composition is formed at the doctor blade, upstream thereof. The supply of molding composition is adjusted in such a manner that a space having the width of approximately 10 cm is maintained free from molding composition along the longitudinal edges of the glass plate 3 which are parallel to the line 5. The depth of the layer of molding composition is adjusted with the glass as a reference surface, which is carried out by having the doctor blade supported by rollers or the like which roll or slide upon the glass. At the spreeding out of the molding composition the glass plate 3 or, preferably, the doctor blade may be vibrated.

In the next station which is designated 15 in Fig. 1 a reinforcing mat which may be comprised of a glass fibre net or web is deposited into the layer of the first molding composition just applied before the latter is incompletely cured in the following curing station 16. The curing operation which is carried out through heating, preferably by means of infra irradiation, of the mold carriage 1 and the layer applied thereto, takes place as soon as possible after the reinforcement in the station 15 and is driven only so far that the first molding composition becomes form-stable.

After that a second molding composition which basically conforms to the first one but contains less than the first mass and is thixotrope is spread out upon the first molding composition in the station 17. The second molding composition is not cured. The layers described above are jointly referred to as "surface layer" in the following.

On only every second mold carriage which is advanced along the conveyor or line 5 there is applied according to the invention upon the surface layer an intermediate layer of a spacing material. This may be comprised of polyurethane, mineral wool, corrugated cardboard, different mats of the honeycomb type or the like. Usually the intermediate layer is thicker than the above surface layer which consists of a molding composition and a possible glossy layer and in which the intermediate layer is pressed down with one of its principal surfaces, so that it adheres, and it may have a thickness of about 8 - 200 mm. The intermediate layer which is selected in dependence of the field of use of the finished panel, may e.g. be fireproof and/or contain a reinforcement.

The application of the intermediate layer which may be carried out either manually or automatically is carried out at the transition from the first line 5 to the second line 6 in the last station 20 of the first line. In the exemplificatory embodiment according to Fig. 1 two plates 19 of an intermediary layer are shown which from the right (as is indicated by means of arrows in the Figure) are applied to respective forms or molds 3, which are coated by surface layers, in the last station of the first line 5. Alternatively, it is also possible to apply the intermediate layer upon the surface layer in the first station 21 of the second line 6 which is often preferred in practice.

In connection with the transition between the first line 5 and the second line 6 the second half of the mold carriages whose surface layers of the panels being manufactured have no intermediate layer applied to them, are inverted and lowered over the first half of the mold carriages so that the surface layer of the second half becomes positioned straight above the respective intermediate layers of the second half and are caused to adhere therein. An inverting apparatus for carrying through the inverting operation is diagrammatically illustrated in Figs. 2 and 3 in which the same reference numerals as in Fig. 1 have been utilized to designate same or similar details.

In Fig. 2 there is shown the end (the left hand end) of the first, upper line 5 and the beginning of the second, lower line 6, which extends in the opposite direction with respect to the first line. Said ends are supported by a framework which is generally designated 23. In addition to the ends the framework 23 carries a pair of rails 24 for a transport carriage 25 which has more or less diagrammatically indicated wheels 26 (Fig. 3) which can roll on the rails 24, so that the carriage 25 may be displaced back and forth in the direction of the arrows 27. The carriage 25 carries a framework which is generally designated 28 for the panel elements 9 being manufactured. The framework 28 cannot only be displaced back and forth in the longitudinal direction of the lines 5 and 6 but also be raised or lowered as is indicated by the arrows 29 in Fig. 2, by means of screws 30 which cooperate with threaded bores in lateral beams 31 comprised in the framework. The framwork 28 also has catching means in the form of studs 32 (Fig. 2) for the mold carriages 1. These studs, at least some of which are displaceable in their longitudinal direction can be brought into engagement with corresponding openings in cross beams comprised in the mold carriages 1. In the framework 28 there is also comprised a diagrammatically illustrated inverting apparatus 33 by means of which the mold carriage 1 can be turned upside down or inverted, as is indicated by the arrow 34 in Fig. 3.

The inverting apparatus shown in Figs. 2 and 3 operates in the following manner, it being presumed that the panel elements 9 on the lower line 6 consist of a surface layer and an intermediate layer, and that the panel element 9' on the mold carriage 3' in the framework 28 consists of only one surface layer (the thickness of which has been considerably exaggerated for reasons of clarity).

By means of the inverting apparatus 33 the framework 28 is turned upside down so that the panel element 9' becomes inverted. By means of the screws 30 then the framwork 28 is lowered so that the panel element 9' is deposited on the panel element 9 on the lower line 6. This panel element 9 is now a whole or complete panel or board.

After that the framework 28 is raised to a higher level than the first line 5 and is returned to the right in Fig. 2 by means of the carriage 25 until it becomes positioned just above the next mold carriage. Now the framework is lowered by means of the screws 30 and grips the mold carriage and raises it subsequently by the aid of the screws 30 and displaces it leftwards to the position shown in Fig. 2 by means of the carriage 25. After that this transport carriage is lowered by means of the screws 30 and deposited on the lower line 6 without being inverted. Thus, the inverting apparatus only inverts every second mold carriage in connection with the transfer of the carriages from the first line 5 to the second line 6.

The lastmentioned line 6 which in the exemplificatory embodiment is also a conveyor with driven rollers and is located under the first line comprises a heating zone 36 and a cooling zone 37. The heating zone 36 is basically a tunnel oven which is heated by means of an infra radiator or the like and in which the surface layer of the panels is substantially completely cured.

In the cooling zone 37 which can, but does not have to, be a tunnel, the panels are fanned by air of room temperature.

In the stations 39 and 40 disassembling of each pair of mold carriages 1 which belong to one and the same panel is carried out. In the station 40 the finished panel is taken out. From the station 40 the empty mold carriages are returned to the first described station 7 in line 5, the panels being transferred via a conveyor 42 to a sawing station 41 in which they are clean-sawed.

The embodiment described above and illustrated on the drawings is, of course, to be regarded merely as a non-limiting example and may as to its details be modified in several ways within the scope of the following claims. For example those panel elements which are inverted by means of the inverting apparatus may be such elements as comprise a surface layer as well as an intermediate layer applied thereto, the other panel elements, which consequently have no intermediate layer, being only transported but not inverted by the inverting apparatus. Furthermore, the stations 11 and 12 and/or 13 and 15 (or alternatively 17) may be omitted. Thus, the surface layer may, at least in certain cases, be comprised of only one coating in addition hereto endless conveyor belts may be utilized for advancing the molds or mold carriages in the lines or conveyors 5 and 6, instead of the driven rollers described above.

## Claims

1) A method in the manufacture of panels, bulding boards and the like which comprise at least two surface layers, each containing a curable resinous material and a filler admixed thereto, and an intermediate layer, wherein a first layer is spread out on to a first base plate and is caused to gel or harden incompletely, after which preferably a second layer, also containing a curable resinous material and a filler admixed thereto, is applied in a substantially uniform layer on to said first layer, after which an intermediate layer, comprising a solid, preferably flexible material, e.g. mineral wool, is applied to said first layer or second layer, respectively, and caused to adhere thereto, after which a base plate provided with at least one layer according to the above is turned upside down and positioned upon said first base plate in such a way, that said intermediate layer becomes located between said surface layers, which are subsequently cured before the multilayered panel thus prepared is loosened from the base plates, **characterized** in that a series of base plates (1) are advanced in succession through a plurality of stations (11, 13, 17) in which a surface layer is applied to all base plates (3), that an intermediate layer is applied only to every second base plate provided with an applied surface layer that every second plate (3) including an applied surface layer of the series is inverted and positioned upon a preceding, or alternatively a following, panel in such a way that laminated units are formed, each comprising two base plates, an intermediate layer, and two surface layers, each located between an appurtenant base plate and said intermediate layer, after which said units are advanced through a heating or curing zone (36) and subsequently through a cooling zone (37) before the panels, each comprising two surface layers and an intermediate layer, are separated from their appurtenant base plates.

2) Method according to claim 1, **characterized** in that those base plates which have been provided only with a surface layer, which possibly consists of two coatings, are inverted, those base plates which have been provided with an applied intermediate layer being maintained unturned.

3) System for the carrying out of the method according to claim 1, **characterized** by the combination of:

A) a plurality of molds (1), each comprising a rigid frame (2) and a base plate (3) of a hard, plane and substantially even material, e.g. glass, secured on to the frame;

B) a first conveyor (5), e.g. a roller conveyor having driven rollers;

C) at least one station (13) provided at the conveyor for application of a surface layer containing a curable resinous material and admixed filler in a substantially uniform layer on each base plate;

D) a seond conveyor (6) for advancing units or packages, each consisting of one inverted mold and one un-inverted form as well as two surface layers and an intermediate layer interposed between said surface layers, said layers forming together a laminated panel having at least three layers, which is interposed between the two base plates of the molds;

E) a station (20) for application of a solid, possibly flexible intermediate layer upon the surface layer on the base plate of every second mold and uniting said two layers with each other, said station being located at said first conveyor or said second conveyor (5 and 6), respectively);

F) a station having means for inverting every second mold and its appurtenant layers, which have been applied to the base plate (3) of the mold, and positioning of the inverted mold on a preceding mold in the succession in such a way that the intermediate layer becomes located between that surface layer with which it already is united, and said second surface layer; said station being locted between the first conveyor and the second conveyor;

G) a cooling zone through which said second conveyor (6) passes; and

H) a curing zone (36) which is located between said mold inverting means and said cooling zone and through which said second conveyor (6) passes.

4) System according to claim 3, **characterized** in that said inverting means is constructed for inverting molds having an adhering surface layer without any intermediate layer united therewith.

5) System according to claim 3 or 4, **characterized** in that said second conveyor (6) is located below the first conveyor (5).

6) System according to claim 3, **characterized** by the provision of two stations (13, 17) for applying one individual coating each of a surface layer comprised of two coatings on the base plate, said stations being provided after each other along said first conveyor.

7) System according to claim 6, **characterized** by the provision of a station (15) between said first surface coating appliction station and said second surface coating application station (13 and 17, respectively) for application of a reinforcement in the first surface layer coating applied to the base plate.

8) System according to claim 6 or 7, **characterized** by the provision of a station (6) which is provided between said first surface layer coating application station and said second surface layer coating application station for curing the possible reinforced surface layer coating, said curing station preferably comprising a source of infra radiation.

FIG.1

# FIG.2

0 241 993

0 241 993

FIG.3